(19)

**Europäisches Patentamt**

**European Patent Office**

**Office européen des brevets**

(11) **EP 2 197 149 B1**

(12) **EUROPÄISCHE PATENTSCHRIFT**

(45) Veröffentlichungstag und Bekanntmachung des Hinweises auf die Patenterteilung:
**29.10.2014 Patentblatt 2014/44**

(21) Anmeldenummer: **09169711.0**

(22) Anmeldetag: **08.09.2009**

(51) Int Cl.:
*H04L 9/00* *(2006.01)*    *H04L 9/30* *(2006.01)*

(54) **Verfahren und Vorrichtung zum Verarbeiten von Daten**

Device and method for processing data

Dispositif et procédé de traitement de données

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **10.12.2008 DE 102008061483**

(43) Veröffentlichungstag der Anmeldung:
**16.06.2010 Patentblatt 2010/24**

(73) Patentinhaber: **Siemens Aktiengesellschaft 80333 München (DE)**

(72) Erfinder:
• **Georgiades, Jean Dr.**
  **80805 München (DE)**
• **Kargl, Anton**
  **80997 München (DE)**
• **Meyer, Bernd Dr.**
  **81739 München (DE)**

(56) Entgegenhaltungen:
**US-A1- 2007 071 237**

• **R. ZUCCHERATO, ENTRUST TECHNOLOGIES: "Methods for Avoiding the Small-Subgroup Attacks on the Diffie-Hellman Key Agreement Method for S/MIME; rfc2785.txt" IETF STANDARD, INTERNET ENGINEERING TASK FORCE, IETF, CH, 1. März 2000 (2000-03-01) , XP015008568 ISSN: 0000-0003**
• **M. BRAUN, E. HESS, B. MEYER: "Using Elliptic Curves on RFID Tags" IJCSNS INTERNATIONAL JOURNAL OF COMPUTER SCIENCE AND NETWORK SECURITY, Bd. 8, Nr. 2, 20. Februar 2008 (2008-02-20), Seiten 1-9, XP002570770**
• **MENEZES A ET AL: "HANDBOOK OF APPLIED CRYPTOGRAPHY, PASSAGE" 1. Januar 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 78 - 81 , XP002416024 ISBN: 9780849385230 * Fact 2.213; Seite 81 ***
• **BROWN D R L ET AL: "The Static Diffie-Hellman Problem" CERTICOM RESEARCH,, [Online] 23. Juni 2005 (2005-06-23), Seiten 1-17, XP002533452 Gefunden im Internet: URL:http://eprint.iacr.org/ 2004/306.ps>**
• **D. E. Knuth: "The Art of Computer Programming" Oktober 2005 (2005-10), Addison-Wesley , XP002570771 ISBN: 0201896842 Bd. 2, , Seiten 402-407 * das ganze Dokument ***

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zum Verarbeiten von Daten, insbesondere zum kryptographischen Verarbeiten von Daten.

Das technische Gebiet der Erfindung betrifft die kryptographische Verarbeitung von Daten basierend auf elliptischen Kurven.

Das Dokument US 2007/071237 A1 zeigt ein Verfahren zur Auswahl von Gruppen für ein statisches Diffie-Hellman-Schlüsselvereinbarungsprotokoll, um aktive Attacken zu verhindern.

Das Dokument "Methods for avoiding the Small-Subgroup Attacks on the Diffie-Hellman Key Agreement Method for S/MIME; rfc2785.txt" von R. Zuccherato, Entrust Technologies, zeigt ebenfalls ein Verfahren zum Verhindern von Attacken auf ein Diffie-Hellman-Schlüsselvereinbarungssystem.

Das Dokument von M. Baun, E. Hess, B. Meyer: "Using Elliptic Curves on RFID Tags" zeigt ein Verfahren zum Verwenden elliptischer Kurven in kryptographischen Verfahren für RFID Tags.

Kryptographische Verfahren werden unter anderem zum Verschlüsseln von Botschaften, Signieren von Dokumenten und Authentifizieren von Personen oder Objekten verwendet. Hierfür eignen sich insbesondere so genannte asymmetrische Verschlüsselungsverfahren, die für einen Teilnehmer sowohl einen privaten und geheim gehaltenen Schlüssel als auch einen öffentlichen Schlüssel vorsehen.

Beim Verschlüsseln einer Botschaft besorgt sich der Absender den öffentlichen Schlüssel des gewünschten Adressaten und verschlüsselt damit die Botschaft. Nur der Adressat ist danach in der Lage, die Botschaft mit dem nur ihm bekannten privaten Schlüssel wieder zu entschlüsseln.

Beim Signieren eines Dokuments berechnet ein Unterzeichnender aus einem Dokument mit seinem privaten Schlüssel eine elektronische Unterschrift. Andere Personen können ohne weiteres die Unterschrift mit Hilfe des öffentlichen Schlüssels des Unterzeichnenden verifizieren. Es lassen sich jedoch nur Unterschriften mit dem öffentlichen Schlüssel verifizieren, die mit dem zugehörigen privaten Schlüssel signiert werden. Durch diese eindeutige Zuordnung und die Annahme, dass der private Schlüssel von dem Unterzeichnenden geheim gehalten wird, ergibt sich eine eindeutige Zuordnung der Signatur zu dem Unterzeichnenden und dem Dokument.

Beim Authentifizieren mittels eines Challenge-Response-(Anfrage-Antwort)Protokolls übermittelt eine Prüfstelle eine Anfrage an eine Person/Objekt und fordert diese auf, zu dieser Anfrage mit dem privaten Schlüssel der Person/Objekt eine Antwort zu berechnen und zurückzusenden. Eine positive Authentifizierung erfolgt in dem Fall, dass die Prüfstelle die zurückgesandte Antwort mit dem öffentlichen Schlüssel der zu prüfenden Person/Objekt verifizieren kann.

Die asymmetrischen Kryptographieverfahren basieren, wie oben ausgeführt, auf einem privaten und einem öffentlichen Schlüssel. Dabei wird der öffentliche Schlüssel aus dem privaten Schlüssel mittels eines vorbestimmten Algorithmus generiert. Wesentlich für die kryptographischen Verfahren ist, dass eine Umkehrung, d. h. eine Bestimmung des privaten Schlüssels aus dem öffentlichen Schlüssel in vertretbarer Zeit mit den zur Verfügung stehenden Rechenkapazitäten nicht bewältigbar ist. Letzteres ist gewährt, wenn die Schlüssellänge des privaten Schlüssels eine Mindestlänge erreicht. Die Mindestlänge des Schlüssels ist von den verwendeten Algorithmen für die Verschlüsselung und der Bestimmung des öffentlichen Schlüssels abhängig.

Die Operationen mit den öffentlichen oder den privaten Schlüsseln erfordern einen gewissen Rechenaufwand. Dieser ist abhängig von den verwendeten Algorithmen und auch von der Länge der verwendeten Schlüssel. Hierbei erweist es sich als vorteilhaft, kryptographische Verfahren basierend auf elliptischen Kurven zu verwenden, da diese eine hohe Sicherheit bei kurzen Schlüssellängen gewähren. Bisher ist für Kryptographieverfahren basierend auf elliptischen Kurven im Gegensatz zu anderen Verfahren keine Bestimmung des privaten Schlüssels aus dem öffentlichen Schlüssel bekannt, deren Rechenaufwand langsamer als mit exponentiellen Anstieg mit zunehmender Schlüssellänge ansteigt. In anderen Worten der Sicherheitsgewinn pro zusätzliche Bitlänge des verwendeten Schlüssels ist höher als bei anderen Verfahren. Für praktische Anwendungen können daher deutlich kürzere Schlüssellängen verwendet werden.

Eine elliptische Kurve E ist allgemein durch eine Weierstraß-Gleichung definiert, welche sich als folgende kubische Gleichung schreibt:

$$y^2 + a_1 xy + a_3 y = x^3 + a_2 x^2 + a_4 x + a_6.$$

Dabei sind die $a_1$ $a_2$ $a_3$ $a_4$ $a_6$ fest ausgewählte Elemente eines Körpers K und die Paare (x, y) heißen Punkte der elliptischen Kurve E und erfüllen die Weierstraß-Gleichung. Für die kryptographischen Verfahren wird ein endlicher Körper K ausgewählt. Entsprechend ist auch die Anzahl der Punkte der elliptischen Kurve E endlich und wird nachfolgend als Ordnung ord(E) der Kurve E bezeichnet. Zusätzlich wird ein formaler Punkt im Unendlichen eingeführt.

Auf der Menge der Punkte der elliptischen Kurve kann eine abelsche Gruppenstruktur G definiert werden. Die Operation der abelschen Gruppenstruktur wird nachfolgend als Addition bezeichnet und additiv geschrieben. Die Addition zweier beliebiger Punkte der elliptischen Kurve ergibt eindeutig einen dritten Punkt dieser elliptischen Kurve. Ferner kann auf diese Weise eine Skalarmultiplikation definiert werden, welche als mehrfache Addition eines Punktes mit sich selbst definiert ist. P sei ein Punkt der elliptischen Kurve E, s eine ganze Zahl und Q=sP das s-fache des Punktes P. Q ist ebenfalls ein Punkt der elliptischen Kurve. Die Bestimmung des Skalars s bei gegebenen Punkten P und Q wird als diskretes Logarithmus-Problem für elliptische Kurven bezeichnet. Bei einer geeigneten Wahl des Körpers K und der Parameter der elliptischen Kurve E ist es mit den heute zur Verfügung stehenden Rechnereinrichtungen unmöglich, das diskrete Logarithmus-Problem in vertretbarer Zeit zu lösen. Auf dieser Schwierigkeit beruht die Sicherheit von kryptographischen Verfahren mittels elliptischer Kurven.

Ein Kommunikationsteilnehmer wählt einen Skalar s als seinen privaten Schlüssel und hält diesen geheim. Ferner generiert er aus einem Startpunkt P den öffentlichen Schlüssel Q als das skalare Vielfache des Startpunktes P mit dem Skalar s. Hinsichtlich des Startpunktes P besteht Einigkeit zwischen den Kommunikationsteilnehmern. Eine Bestimmung des privaten Schlüssels s aus dem öffentlichen Schlüssel Q ist aufgrund des hohen rechnerischen Aufwandes des diskreten Logarithmus-Problems nicht möglich und gewährt somit die Sicherheit von kryptographischen Verfahren mit elliptischen Kurven. Eine weitere Forderung an die elliptischen Kurven ist, dass ihre Ordnung eine große Primzahl oder das Produkt einer großen Primzahl mit einer kleinen Zahl ist.

Die kryptographischen Verfahren stellen einen Kompromiss zwischen einer zu erwartenden Sicherheit und dem rechnerischen Aufwand beim Verschlüsseln von Daten dar. In der DE 101 61 138 A1 ist gezeigt, dass eine Bestimmung des skalaren Vielfachen eines Punktes allein anhand der x-Koordinaten ohne Hinzuziehen der y-Koordinaten möglich ist. Entsprechende Rechenvorschriften sind für beliebige Körper in der DE 101 61 138 A1 beschrieben. Hierdurch lassen sich wesentlich effizientere Implementierungen der Punktarithmetik, z. B. einer Montgomery Leiter für die Skalarmultiplikation, eine geringere Anzahl an Körpermultiplikationen pro Punktaddition und eine geringere Anzahl von Registern für die Punktdarstellung und der Zwischenergebnisse erreichen. Allerdings wird bei diesem Verfahren nicht geprüft, ob ein Punkt wirklich Element der elliptischen Kurve ist.

Hieraus ergibt sich die Möglichkeit, einen Angriff durchzuführen. An eine Verschlüsselungseinrichtung kann dabei eine x-Koordinate eines Punktes übermittelt werden, wobei der Punkt nicht auf der elliptischen Kurve liegt. Hierzu wird in der DE 10161138 A1 beschrieben, dass hierdurch eine teilweise Rekonstruktion des privaten Schlüssels der Verschlüsselungseinrichtung möglich ist. Die DE 10161138 A1 verwendet zum Verhindern eines solchen Seitenkanalangriffs speziell ausgewählte elliptische Kurven. Als Kriterium dienen hierbei die zu den elliptischen Kurven zugehörigen getwisteten elliptischen Kurven. Die zugehörige getwistete elliptische Kurve ist wie folgt definiert:

$$y^2 + va_1xy + a_3y = x^3 + va_2x^2 + v^2a_4x + v^3a_6,$$

wobei die Parameter $a_1$, $a_2$, $a_3$, $a_4$, $a_6$ die Parameter der elliptischen Kurven sind. Der Parameter v ist ein beliebiges Nicht-Quadrat des Körpers K, falls die Charakteristik des Körpers K ungerade ist, oder ein Element des Körpers K mit Spur 1, falls die Charakteristik 2 ist. Alle diese getwisteten elliptischen Kurven sollen nach der DE 10161138 A1 ebenfalls eine Ordnung haben, die eine große Primzahl oder das Produkt einer großen Primzahl mit einer kleinen Zahl ist.

Die Autoren Daniel R. L. Brown und Robert P. Gallant beschreiben in ihrem Artikel "The Static Diffie-Hellman Problem" eine weitere Möglichkeit für einen Angriff, um einen privaten Schlüssel vollständig oder teilweise auszuspähen.

Der in der Veröffentlichung "The Static Diffie-Hellman Problem" beschriebene Angriff auf kryptographische Verfahren, deren Sicherheit auf dem diskreten Logarithmus-Problem in einer endlichen Gruppe beruht, ist insbesondere auf elliptische Kurven anwendbar. Der beschriebene Angriff kann insbesondere dann effizient durchgeführt werden, wenn einem Angreifer ein Gerät zur Verfügung steht, in der Literatur herkömmlich Orakel genannt, das einen geheimen Skalar s enthält und dem Angreifer bei Eingabe eines beliebigen Punktes U das Ergebnis der Berechnung T=sU, folglich den Ergebnispunkt T der Skalarmultiplikation, zurückgibt. Bei diesem Angriff wird insbesondere eine Folge von Punkten $P_0$, $P_1$, $P_2$, ..., $P_n$ auf der elliptischen Kurve benötigt, wobei $P_1=sP_{i-1}$, $P_0=P$ gilt.

Bei einem der Anmelderin intern bekannten, herkömmlichen Authentifizierungsprotokoll basierend auf einer elliptischen Kurve wird eine Skalarmultiplikation berechnet. Als Ergebnis dieser Skalarmultiplikation wird die x-Koordinate in einer zufällig gewählten projektiven Darstellung $(X_2, Z_2)$ zurückgegeben. Die Sicherheit des Authentifizierungsprotokolls basiert gegenüber dem Static-Diffie-Hellman Angriff herkömmlicherweise auf den Eigenschaften der verwendeten elliptischen Kurve.

Vor diesem Hintergrund liegt der vorliegenden Erfindung die Aufgabe zu Grunde, eine Lösung zur Bereitstellung kryptographisch transformierter Daten zu schaffen, welche Angriffe erschwert bzw. praktisch ausschließt.

Erfindungsgemäß wird diese gestellte Aufgabe durch ein Verfahren mit den Merkmalen des Patentanspruchs 1 und/oder durch ein Computerprogrammprodukt mit den Merkmalen des Patentanspruchs 10 und/oder durch eine Vorrichtung mit den Merkmalen des Patentanspruchs 11 gelöst.

Demgemäß wird ein Verfahren zum Verarbeiten von Daten vorgeschlagen, welches folgende Schritte hat:

a) Bereitstellen einer elliptischen Kurve mit einer Ordnung m, welche einem Produkt aus einem ersten Kofaktor c und einer Primzahl q entspricht, wobei die Ordnung (q-1) der multiplikativen Gruppe der Primzahl q einem Produkt aus einem zweiten Kofaktor 1 und mindestens zwei Primteilern $s_1$, ..., $s_k$ entspricht, wobei die mindestens zwei Primteiler $s_1$, ..., $s_k$ jeweils größer als eine vorbestimmte Schranke $2^n$ sind; und
b) Anwenden eines ausgewählten Verfahrens auf bereitgestellte Daten unter Verwendung der bereitgestellten elliptischen Kurve zur Bereitstellung kryptographisch transformierter Daten.

Weiter wird ein Computerprogrammprodukt vorgeschlagen, welches auf einer programmgesteuerten Einrichtung die Durchführung eines wie oben beschriebenen Verfahrens veranlasst.

Ein Computerprogramm-Produkt wie ein Computerprogramm-Mittel kann beispielsweise als Speichermedium, wie Speicherkarte, USB-Stick, Floppy, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen.

Ferner wird eine Vorrichtung zum Verarbeiten von Daten vorgeschlagen, welche aufweist:

a) ein Bereitstellungsmittel, welches dazu eingerichtet ist, eine elliptische Kurve mit einer Ordnung m bereitzustellen, welche einem Produkt aus einem ersten Kofaktor c und einer Primzahl q entspricht, wobei die Ordnung (q-1) der multiplikativen Gruppe der Primzahl q einem Produkt aus einem zweiten Kofaktor 1 und mindestens zwei Primteilern $s_1$, ..., $s_k$ entspricht, wobei die mindestens zwei Primteiler $s_1$, ..., $s_k$ jeweils größer als eine vorbestimmte Schranke $2^n$ sind; und
b) ein Rechenmittel, welches dazu eingerichtet ist, ein ausgewähltes Verfahren auf bereitgestellte Daten unter Verwendung der bereitgestellten elliptischen Kurve zur Bereitstellung von kryptographisch transformierten Daten anzuwenden.

Das jeweilige Mittel, Bereitstellungsmittel und Rechenmittel, kann hardwaretechnisch oder auch softwaretechnisch implementiert sein. Bei einer hardwaretechnischen Implementierung kann das jeweilige Mittel als Vorrichtung, zum Beispiel als Computer oder Mikroprozessor, Einrichtung oder auch als Teil eines Systems, zum Bespiel als Computer-System, ausgebildet sein. Bei einer softwaretechnischen Implementierung kann das jeweilige Mittel als Computerprogrammprodukt, als eine Funktion, als eine Routine, als Teil eines Programmcodes oder als ausführbares Objekt ausgebildet sein.

Die der vorliegenden Erfindung zu Grunde liegende Idee besteht im Wesentlichen darin, zur Abwehr des Static-Diffie-Hellman-Angriffs für Anwendungen mit relativ langsamer Auswertung des Orakels, die Verwendung elliptischer Kurven vorzuschlagen, bei denen die Faktorisierung der Ordnung der multiplikativen Untergruppe der Ordnung der Punktegruppe der elliptischen Kurve die folgende Form hat: Die Faktorisierung besteht aus einem relativ kleinen Kofaktor c und mindestens zwei Primteilern $s_1$, ..., $s_k$, wobei alle diese Primteiler $s_1$, ..., $s_k$ so groß sind, dass der Angriff praktisch nicht mehr durchgeführt werden kann.

Der oben genannte Vorteil wird am folgenden Beispiel einer herkömmlich verwendeten elliptischen Kurve deutlich, welche eine Punktgruppe mit Ordnung m in der Größenordnung von $2^{128}$ verwendet. Wenn beispielsweise die Ordnung q-1 der multiplikativen Gruppe der Primzahl q so gewählt wird, dass q-1 = $2 \cdot s_1 \cdot s_2$ ist, wobei $s_1$ und $s_2$ Primzahlen von ungefähr gleicher Länge sind, ist der Static-Diffie-Hellman-Angriff praktisch nicht mehr durchführbar. Die Teiler von q-1 sind entweder 2 oder enthalten einen großen Primteiler $s_1$, $s_2$. Unter der Annahme, dass maximal 100 Authentifizierungen pro Sekunde mit einem herkömmlichen IC (Integrated Circuit) möglich sind und die Primzahlen $s_1$, $s_2$ jeweils größer als $2^{50}$ sind, wären für den beschriebenen Angriff mehr als $2^{50}$ Berechnungen durch den IC notwendig. Diese würden damit mehr als 356.000 Jahre dauern. Selbst für den im Sinne der Veröffentlichung "The Static Diffie-Hellman Problem" für den Angriff optimalen Fall, dass q-1 = $2 \cdot s_1 \cdot s_2 \cdot s_3$, wobei $s_1, s_2, s_3$ jeweils Primzahlen größer $2^{40}$ sind, beträgt die Berechnungsdauer der Auswertungen noch über 348 Jahre.

Damit ergibt sich ein weiterer Vorteil der vorliegenden Erfindung dahingehend, dass die Menge an elliptischen Kurven, welche immun gegen Static-Diffie-Hellman-Angriffe sind, vergrößert ist.

Vorteilhafte Ausgestaltungen und Weiterbildungen der Erfindung ergeben sich aus den Unteransprüchen sowie der Beschreibung unter Bezugnahme auf die Zeichnungen.

Gemäß einer bevorzugten Weiterbildung ist n = 50 oder n = 55 oder n = 64 oder n = 80 oder n = 128.

Gemäß einer weiteren bevorzugten Weiterbildung ist n > $0,9 \cdot \log_2$ (q) /k ist, wobei k, mit k $\geq$ 2, der Anzahl der Primteiler $s_1$, ..., $s_k$ entspricht, welche jeweils größer als die vorbestimmte Schranke von $2^n$ sind.

Gemäß einer weiteren bevorzugten Weiterbildung werden die elliptische Kurve und eine zu der elliptischen Kurve zugeordnete getwistete elliptische Kurve derart bereitgestellt, dass beide jeweils eine Ordnung m haben, welche einem jeweiligen Produkt aus einem ersten Kofaktor c und einer Primzahl q entspricht, wobei die Ordnung (q-1) der multiplikativen Gruppe der Primzahl q einem Produkt aus einem zweiten Kofaktor und mindestens zwei Primteilern $s_1$, ..., $s_k$ entspricht, wobei die mindestens zwei Primteiler $s_1$, ..., $s_k$ jeweils größer als eine vorbestimmte Schranke von $2^n$ sind. Ein Vorteil bei der Verwendung einer wie oben beschriebenen elliptischen Kurve und einer zu der elliptischen Kurve zugeordneten getwistete elliptische Kurve liegt darin, dass die Wahrscheinlichkeit für einen erfolgreichen Angriff weiter minimiert ist.

Elliptische Kurven über endlichen Körpern treten in Paaren auf. Das bedeutet, dass zu einer gegebenen elliptischen Kurve $E(a_1, a_2, a_3, a_4, a_6)$ stets sogenannte getwistete Kurven E' $(va1, va_2, a_3, v^2a_4, v^3a_6)$ gehören, wobei v ein Nichtquadrat des Körpers K ist, falls die Charakteristik von K ungerade ist, oder ein Element mit Spur 1 ist. Die Ordnungen von E und einer zugehörigen getwisteten Kurve E' hängen voneinander ab und erfüllen die Gleichung ord(E)+ord(E')=2·ord(K)+2. Insbesondere hängt ord(E') nicht von der konkreten Wahl des Nichtquadrats v oder des Elements mit Spur 1 ab.

Bei Anwendungen elliptischer Kurven für Public-Key-Verfahren, sind auch die kryptographischen Eigenschaften der zu E getwisteten Kurven E' von Bedeutung. Dabei ist der Anmelderin intern ein Modul bekannt, welches zur Authentifizierung, Verschlüsselung, Schlüsseleinigung und dergleichen geeignet ist. Der Modul erlaubt es, asymmetrische kryptographische Verfahren auf Basis elliptischer Kurven so zu realisieren, dass auf diese Weise Massenanwendungen, wie beispielsweise RFIDs, mit Public-Key-Kryptographie kostengünstig machbar sind. Um kostengünstige Massenanwendungen zu ermöglichen, werden die relativ komplizierten, oben beschriebenen Techniken zum Einsatz elliptischer Kurven vorzugsweise in mehreren Aspekten vereinfacht:

In dem oben beschriebenen Modul werden von den Punkten auf der elliptischen Kurve nur noch die x-Koordinaten verwendet. Diese Vergröberung der Struktur bringt sicherheitstechnisch keine Nachteile, erlaubt aber wesentlich effizientere Implementierungen der Punktearithmetik, zum Beispiel: Verwendung der Montgomery-Leiter zur Skalarmultiplikation, geringere Anzahl an Körpermultiplikationen pro Punktaddition, geringere Anzahl an Registern für Punktdarstellung und Zwischenergebnisse.

Weiter ist in dem oben beschriebenen Modul eine implizite Korrektheitsprüfungen für übergebene Punkte und Parameter ermöglicht. Ferner ist die Verwendung eines einfachen Rechenwerks für einen Erweiterungskörper der Charakteristik 2 vorteilhafterweise bereitgestellt. Ferner ist eine Verlagerung aufwendiger Rechenschritte auf die Seite des Terminals oder Endgerätes ermöglicht.

Die Vereinfachungen der Kryptographie mit elliptischen Kurven in oben beschriebenen Modul oder Vorrichtung haben eine zusätzliche Anforderung an eine für den Modul geeignete kryptographisch starke elliptische Kurve E zur Folge: Damit die an den Modul übergebene Parameter nicht mehr auf ihre Korrektheit getestet werden müssen, sondern implizit korrekt sind und keine Bedrohung darstellen, muss vorzugsweise auch die zu E getwistete Kurven E' kryptographisch stark sein.

Gemäß einer weiteren bevorzugten Weiterbildung wird als Verfahren für den Schritt b) ein Schlüsselaustauschprotokoll auf der Basis der bereitgestellten elliptischen Kurve, zum Beispiel ein Diffie-Hellman-Schlüsselaustauschprotokoll, ausgewählt.

Gemäß einer weiteren bevorzugten Weiterbildung wird als Verfahren für den Schritt b) ein Authentifizierungsverfahren auf Basis von Challange-Response-Protokollen mittels der bereitgestellten elliptischen Kurve ausgewählt.

Gemäß einer weiteren bevorzugten Weiterbildung wird als Verfahren für den Schritt b) ein asymmetrisches Verschlüsselungsverfahren mittels der bereitgestellten elliptischen Kurve ausgewählt.

Gemäß einer weiteren bevorzugten Weiterbildung ist der erste Kofaktor c ungleich 1 und relativ klein gegenüber der Primzahl q.

Gemäß einer weiteren bevorzugten Weiterbildung ist der zweite Kofaktor 1 als eine gerade Zahl ausgebildet, welche klein gegenüber den mindestens zwei Primteilern $s_1$, ..., $s_k$ ist.

Die Erfindung wird nachfolgend anhand der in den schematischen Figuren angegebenen Ausführungsbeispiele näher erläutert. Es zeigen:

Figur 1     ein schematisches Ablaufdiagramm eines ersten Ausführungsbeispiels des erfindungsgemäßen Verfahrens zum Verarbeiten von Daten;

Figur 2     ein schematisches Ablaufdiagramm eines zweiten Ausführungsbeispiels des erfindungsgemäßen Verfahrens zum Verarbeiten von Daten; und

Figur 3     ein schematisches Blockschaltbild eines Ausführungsbeispiels einer erfindungsgemäßen Vorrichtung zum Verarbeiten von Daten.

In allen Figuren sind gleiche bzw. funktionsgleiche Mittel und Einrichtungen - sofern nichts anderes angegeben - mit denselben Bezugszeichen versehen.

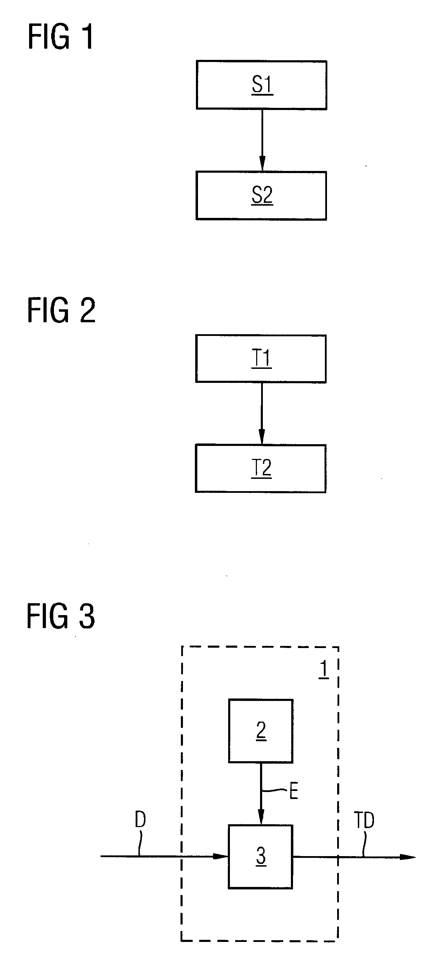

Figur 1 zeigt ein schematisches Ablaufdiagramm eines ersten Ausführungsbeispiels des erfindungsgemäßen Verfahrens zum Verarbeiten von Daten D.

Nachfolgend wird das erfindungsgemäße Verfahren anhand des Blockschaltbildes in Figur 1 in Bezug auf die Figur 3 beschrieben. Das Ausführungsbeispiel des erfindungsgemäßen Verfahrens nach Figur 1 weist die Verfahrensschritte S1 und S2 auf:

Verfahrensschritt S1:

Eine elliptischen Kurve E mit einer Ordnung m, welche einem Produkt aus einem ersten Kofaktor c und einer Primzahl q entspricht, wird bereitgestellt. Die Ordnung (q-1) der multiplikativen Gruppe der Primzahl q entspricht einem Produkt aus einem zweiten Kofaktor 1 und mindestens zwei Primteilern $s_1$, ..., $s_k$. Die mindestens zwei Primteiler $s_1$, ..., $s_k$ sind jeweils größer als eine vorbestimmte Schranke von $2^n$.

Vorzugsweise ist n = 50 oder n = 55 oder n = 64 oder n = 80 oder n = 128. Oder es gilt $n > 0{,}9 \cdot \log_2(q)/k$, wobei k, mit $k \geq 2$, der Anzahl der Primteiler $s_1$, ..., $s_k$ entspricht, welche jeweils größer als die vorbestimmte Schranke von $2^n$ sind.

Weiterhin ist der erste Kofaktor c relativ klein gegenüber der Primzahl q. Ferner ist der zweite Kofaktor l als eine gerade Zahl ausgebildet, welche insbesondere klein gegenüber den mindestens zwei Primteilern $s_l$, ..., $s_k$ ist.

Verfahrensschritt S2:

Ein ausgewähltes Verfahren, insbesondere ein ausgewähltes kryptographisches Verfahren, wird auf bereitgestellte Daten unter Verwendung der bereitgestellten elliptischen Kurve zur Bereitstellung kryptographisch transformierter Daten angewendet.

Beispielsweise wird als Verfahren für den Schritt S2 ein Schlüsselaustauschprotokoll auf der Basis der bereitgestellten elliptischen Kurve, zum Beispiel ein Diffie-Hellman-Schlüsselaustauschprotokoll, ausgewählt.

Als weiteres Beispiel wird als Verfahren für den Schritt b) ein Authentifizierungsverfahren auf Basis von Challange-Response-Protokollen mittels der bereitgestellten elliptischen Kurve ausgewählt.

Des Weiteren kann auch als Verfahren für den Schritt b) ein asymmetrisches Verschlüsselungsverfahren mittels der bereitgestellten elliptischen Kurve ausgewählt werden.

In Figur 2 ist ein schematisches Ablaufdiagramm eines zweiten Ausführungsbeispiels des erfindungsgemäßen Verfahrens zum Verarbeiten von Daten D dargestellt.

Nachfolgend wird das erfindungsgemäße Verfahren anhand des Blockschaltbildes in Figur 2 in Bezug auf die Figur 3 beschrieben. Das Ausführungsbeispiel des erfindungsgemäßen Verfahrens nach Figur 2 weist die Verfahrensschritte T1 und T2 auf:

Verfahrensschritt T1:

Eine elliptische Kurve und eine zu der elliptischen Kurve zugeordnete getwistete elliptische Kurve werden derart bereitgestellt, dass beide jeweils eine Ordnung m haben, welche einem jeweiligen Produkt aus einem ersten Kofaktor c und einer Primzahl q entspricht, wobei die Ordnung (q-1) der multiplikativen Gruppe der Primzahl q einem Produkt aus einem zweiten Kofaktor und mindestens zwei Primteilern $s_l$, ..., $s_k$ entspricht, wobei die mindestens zwei Primteiler $s_l$, ..., $s_k$ jeweils größer als eine vorbestimmte Schranke von $2^n$ sind.

Verfahrensschritt T2:

Ein ausgewähltes Verfahren, insbesondere ein ausgewähltes kryptographisches Verfahren, wird auf bereitgestellte Daten unter Verwendung der bereitgestellten elliptischen Kurve zur Bereitstellung kryptographisch transformierter Daten angewendet.

Figur 3 zeigt ein schematisches Blockschaltbild eines Ausführungsbeispiels einer erfindungsgemäßen Vorrichtung 1 zum Verarbeiten von Daten D.

Die Vorrichtung 1 zum Verarbeiten von Daten D hat ein Bereitstellungsmittel 2 und ein Rechenmittel 3. Das Bereitstellungsmittel 2 ist dazu eingerichtet, eine elliptische Kurve E mit einer Ordnung m bereitzustellen, welche einem Produkt aus einem ersten Kofaktor c und einer Primzahl q entspricht, wobei die Ordnung (q-1) der multiplikativen Gruppe der Primzahl q einem Produkt aus einem zweiten Kofaktor l und mindestens zwei Primteilern $s_1$, ..., $s_k$ entspricht, wobei die mindestens zwei Primteiler $s_1$, ..., $s_k$ jeweils größer als eine vorbestimmte Schranke von $2^n$ sind; und das Rechenmittel 3 ist dazu eingerichtet, ein ausgewähltes Verfahren auf bereitgestellte Daten D unter Verwendung der bereitgestellten elliptischen Kurve E zur Bereitstellung von kryptographisch transformierten Daten TD anzuwenden.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Beispielsweise kann die beschriebene erfindungsgemäße Vorrichtung in einem RFID-Chip eingesetzt werden.

**Patentansprüche**

1. Verfahren zum Verarbeiten von Daten (D), mit den Schritten:

   a) Bereitstellen einer elliptischen Kurve (E) mit einer Ordnung m, welche einem Produkt aus einem ersten Kofaktor c und einer Primzahl q entspricht, wobei die Ordnung q-1 einer multiplikativen Gruppe der Primzahl q einem Produkt aus einem zweiten Kofaktor 1 und mindestens zwei Primteilern $s_1$, ..., $s_k$ entspricht, wobei die mindestens zwei Primteiler $s_1$, ..., $s_k$ jeweils größer als eine vorbestimmte Schranke von $2^n$ sind, wobei n > $0{,}9 \cdot \log_2(q)/k$ ist, wobei k, mit k $\geq$ 2, der Anzahl der Primteiler s1, ..., sk entspricht, welche jeweils größer als die vorbestimmte Schranke von 2n sind; und
   b) Anwenden eines kryptographischen Verfahrens auf bereitgestellte Daten (D) unter Verwendung der bereitgestellten elliptischen Kurve (E) zur Bereitstellung kryptographisch transformierter Daten (TD).

2. Verfahren nach Anspruch 1,
   **dadurch gekennzeichnet,**
   **dass** n = 50 oder n = 55 oder n = 64 oder n = 80 oder n = 128 ist.

3. Verfahren nach Anspruch 1 oder 2,
   **dadurch gekennzeichnet,**
   **dass** die elliptische Kurve (E) und eine zu der elliptischen Kurve zugeordnete getwistete elliptische Kurve derart bereitgestellt werden, dass beide jeweils eine Ordnung m haben, welche einem jeweiligen Produkt aus einem ersten Kofaktor c und einer Primzahl q entspricht, wobei die Ordnung (q-1) der multiplikativen Gruppe der Primzahl q einem Produkt aus einem zweiten Kofaktor und mindestens zwei Primteilern $s_1$, ..., $s_k$ entspricht, wobei die mindestens zwei Primteiler $s_1$, ..., $s_k$ jeweils größer als eine vorbestimmte Schranke von $2^n$ sind.

4. Verfahren nach Anspruch 1 oder einem der Ansprüche 2 bis 3,
   **dadurch gekennzeichnet,**
   **dass** als Verfahren für den Schritt b) ein Schlüsselaustauschprotokoll auf der Basis der bereitgestellten elliptischen Kurve, zum Beispiel ein Diffie-Hellman-Schlüsselaustauschprotokoll, ausgewählt wird.

5. Verfahren nach Anspruch 1 oder einem der Ansprüche 2 bis 3,
   **dadurch gekennzeichnet,**
   **dass** als Verfahren für den Schritt b) ein Authentifizierungsverfahren auf Basis von Challange-Response-Protokollen mittels der bereitgestellten elliptischen Kurve ausgewählt wird.

6. Verfahren nach Anspruch 1 oder einem der Ansprüche 2 bis 3,
   **dadurch gekennzeichnet,**
   **dass** als Verfahren für den Schritt b) ein asymmetrisches Verschlüsselungsverfahren mittels der bereitgestellten elliptischen Kurve ausgewählt wird.

7. Verfahren nach Anspruch 1 oder einem der Ansprüche 2 bis 6,
   **dadurch gekennzeichnet,**
   **dass** der erste Kofaktor c ungleich 1 ist und relativ klein gegenüber der Primzahl q ist.

8. Verfahren nach Anspruch 1 oder einem der Ansprüche 2 bis 7,
   **dadurch gekennzeichnet,**
   **dass** der zweite Kofaktor l als eine gerade Zahl ausgebildet ist, welche klein gegenüber den mindestens zwei Primteilern $s_1$, ..., $s_k$ ist.

9. Computerprogrammprodukt, welches auf einer programmgesteuerten Einrichtung die Durchführung eines Verfahrens nach einem oder mehreren der Ansprüche 1 bis 9 veranlasst.

10. Vorrichtung (1) zum Verarbeiten von Daten (D), mit:

a) einem Bereitstellungsmittel (2), welches dazu eingerichtet ist, eine elliptische Kurve (E) mit einer Ordnung m bereitzustellen, welche einem Produkt aus einem ersten Kofaktor c und einer Primzahl q entspricht, wobei die Ordnung q-1 einer multiplikativen Gruppe der Primzahl q einem Produkt aus einem zweiten Kofaktor 1 und mindestens zwei Primteilern $s_1, ..., s_k$ entspricht, wobei die mindestens zwei Primteiler $s_1, ..., s_k$ jeweils größer als eine vorbestimmte Schranke von $2^n$ sind, wobei n > 0, 9.log2 (q) /k ist, wobei k, mit k ≥ 2, der Anzahl der Primteiler s1, ..., sk entspricht, welche jeweils größer als die vorbestimmte Schranke von 2n sind; und
b) einem Rechenmittel (3), welches dazu eingerichtet ist, ein kryptographisches Verfahren auf bereitgestellte Daten (D) unter Verwendung der bereitgestellten elliptischen Kurve (E) zur Bereitstellung von kryptographisch transformierten Daten (TD) anzuwenden.

**Claims**

1.  Method for processing data (D), comprising the steps:

    a) providing an elliptic curve (E) with an order m, which corresponds to a product of a first cofactor c and a prime number q, wherein the order q-1 of a multiplicative group of the prime number q corresponds to a product of a second cofactor 1 and at least two prime divisors $s_1, ..., s_k$, wherein the at least two prime divisors $s_1, ..., s_k$ are each greater than a predetermined bound of $2^n$, wherein n > 0.9.log2(q)/k, with k, where k ≥ 2, corresponding to the number of prime divisors s1, ..., sk which are each greater than the predetermined bound of 2n; and
    b) applying a cryptographic method to provided data (D) using the provided elliptic curve (E) for providing cryptographically transformed data (TD).

2.  Method according to claim 1,
    **characterised in that**
    n = 50 or n = 55 or n = 64 or n = 80 or n = 128.

3.  Method according to claim 1 or 2,
    **characterised in that**
    the elliptic curve (E) and a twisted elliptic curve associated with the elliptic curve are provided in such a way that both each have an order m which corresponds to a respective product of a first cofactor c and a prime number q, wherein the order (q-1) of the multiplicative group of the prime number q corresponds to a product of a second cofactor and at least two prime divisors $s_1, ..., s_k$, wherein the at least two prime divisors $s_1, ..., s_k$ are each greater than a predetermined bound of $2^n$.

4.  Method according to claim 1 or one of claims 2 to 3,
    **characterised in that**
    a key exchange protocol based on the provided elliptic curve, for example a Diffie-Hellman key exchange protocol, is chosen as the method for step b).

5.  Method according to claim 1 or one of claims 2 to 3,
    **characterised in that**
    an authentication method based on challenge-response protocols using the provided elliptic curve is chosen as the method for step b).

6.  Method according to claim 1 or one of claims 2 to 3,
    **characterised in that**
    an asymmetric encryption method using the provided elliptic curve is chosen as the method for step b).

7.  Method according to claim 1 or one of claims 2 to 6,
    **characterised in that**
    the first cofactor c is not equal to 1 and is relatively small in comparison with the prime number q.

8.  Method according to claim 1 or one of claims 2 to 7,
    **characterised in that**
    the second cofactor 1 is embodied as an even number which is small in comparison with the at least two prime divisors $s_l, ..., S_k$.

9. Computer program product which initiates the performing of a method according to one or more of claims 1 to 9 on a program-controlled device.

10. Device (1) for processing data (D), comprising:

a) a providing means (2) which is configured for the purpose of providing an elliptic curve (E) with an order m which corresponds to a product of a first cofactor c and a prime number q, wherein the order q-1 of a multiplicative group of the prime number q corresponds to a product of a second cofactor 1 and at least two prime divisors $s_l$, ..., $s_k$, wherein the at least two prime divisors $s_l$, ..., $s_k$ are each greater than a predetermined bound of $2^n$, wherein n > 0.9.log2(q)/k, with k, where k ≥ 2, corresponding to the number of prime divisors s1, ..., sk which are each greater than the predetermined bound of 2n; and
b) a computing means (3) which is configured for the purpose of applying a cryptographic method to provided data (D) using the provided elliptic curve (E) for providing cryptographically transformed data (TD).

**Revendications**

1. Procédé de traitement de données (D), comprenant les étapes :

a) fourniture d'une courbe elliptique (E) d'un ordre m qui correspond à un produit d'un premier cofacteur c et d'un nombre premier q, l'ordre q-1 d'un groupe multiplicatif du nombre premier q correspondant à un produit d'un second cofacteur 1 et d'au moins deux facteurs premiers $s_l$, ..., $s_k$, les au moins deux facteurs premiers $s_l$, ..., $s_k$ étant à chaque fois supérieurs à une limite prédéterminée de $2^n$, n satisfaisant à n > 0,9·log2 (q) /k, k, avec k ≥ 2, correspondant au nombre des facteurs premiers $s_1$, ..., $s_k$ qui sont à chaque fois supérieurs à la limite prédéterminée de 2n ; et
b) application d'un procédé de cryptographie à des données (D) fournies en utilisant la courbe elliptique (E) fournie pour fournir des données transformées par cryptographie (TD) .

2. Procédé selon la revendication 1, **caractérisé en ce que** n = 50 ou n = 55 ou n = 64 ou n = 80 ou n = 128.

3. Procédé selon la revendication 1 ou 2, **caractérisé en ce que** la courbe elliptique (E) et une courbe elliptique torsadée associée à la courbe elliptique sont fournies de façon à être toutes les deux à chaque fois d'un ordre m qui correspond à un produit respectif d'un premier cofacteur c et d'un nombre premier q, l'ordre (q-1) du groupe multiplicatif du nombre premier q correspondant à un produit d'un second cofacteur et d'au moins deux facteurs premiers $s_1$, ..., $s_k$, les au moins deux facteurs premiers $s_1$, ..., $s_k$ étant à chaque fois supérieurs à une limite prédéterminée de $2^n$.

4. Procédé selon la revendication 1 ou l'une des revendications 2 à 3, **caractérisé en ce que** l'on choisit, en tant que procédé pour l'étape b), un protocole d'échange de clé sur la base de la courbe elliptique fournie, par exemple un protocole d'échange de clé de Diffie-Hellman.

5. Procédé selon la revendication 1 ou l'une des revendications 2 à 3, **caractérisé en ce que** l'on choisit, en tant que procédé pour l'étape b), un procédé d'authentification sur la base de protocoles de défi-réponse au moyen de la courbe elliptique fournie.

6. Procédé selon la revendication 1 ou l'une des revendications 2 à 3, **caractérisé en ce que** l'on choisit, en tant que procédé pour l'étape b), un procédé de chiffrement asymétrique au moyen de la courbe elliptique fournie.

7. Procédé selon la revendication 1 ou l'une des revendications 2 à 6, **caractérisé en ce que** le premier cofacteur c est différent de 1 et est relativement petit par rapport au nombre premier q.

8. Procédé selon la revendication 1 ou l'une des revendications 2 à 7, **caractérisé en ce que** le second cofacteur 1 est formé comme un nombre pair qui est petit par rapport aux au moins deux facteurs premiers $s_1$, ..., $s_k$.

9. Produit de programme informatique qui cause l'exécution d'un procédé selon une ou plusieurs des revendications 1 à 9 sur un dispositif commandé par programme.

10. Dispositif (1) de traitement de données (D), comprenant :

a) un moyen de fourniture (2) qui est adapté pour fournir une courbe elliptique (E) d'un ordre m qui correspond à un produit d'un premier cofacteur c et d'un nombre premier q, l'ordre q-1 d'un groupe multiplicatif du nombre premier q correspondant à un produit d'un second cofacteur 1 et d'au moins deux facteurs premiers $s_1, ..., s_k$, les au moins deux facteurs premiers $s_1, ..., s_k$ étant à chaque fois supérieurs à une limite prédéterminée de $2^n$, n satisfaisant à $n > 0,9 \cdot \log2 (q) /k$, k, avec $k \geq 2$, correspondant au nombre des facteurs premiers $s_1, ..., s_k$ qui sont à chaque fois supérieurs à la limite prédéterminée de 2n ; et

b) un moyen de calcul (3) qui est adapté pour appliquer un procédé de cryptographie à des données (D) fournies en utilisant la courbe elliptique (E) fournie pour fournir des données transformées par cryptographie (TD).

**FIG 1**

```
┌──────────────┐
│      S1      │
└──────────────┘
        │
        ▼
┌──────────────┐
│      S2      │
└──────────────┘
```

**FIG 2**

```
┌──────────────┐
│      T1      │
└──────────────┘
        │
        ▼
┌──────────────┐
│      T2      │
└──────────────┘
```

**FIG 3**

```
          ┌ ─ ─ ─ ─ ─ ─ ─ ┐
                        1
          │   ┌──────┐    │
              │  2   │
          │   └──────┘    │
                  │
          │       │ E     │
     D            ▼          TD
  ───────┼──►┌──────┐──────┼──►
              │  3   │
          │   └──────┘    │
          └ ─ ─ ─ ─ ─ ─ ─ ┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007071237 A1

- DE 10161138 A1

**In der Beschreibung aufgeführte Nicht-Patentliteratur**

- **VON R. ZUCCHERATO.** Methods for avoiding the Small-Subgroup Attacks on the Diffie-Hellman Key Agreement Method for S/MIME; rfc2785.txt. *Entrust Technologies, zeigt ebenfalls ein Verfahren zum Verhindern von Attacken auf ein Diffie-Hellman-Schlüsselvereinbarungssystem*

- **VON M. BAUN ; E. HESS ; B. MEYER.** Using Elliptic Curves on RFID Tags. *zeigt ein Verfahren zum Verwenden elliptischer Kurven in kryptographischen Verfahren für RFID Tags*